# DEMANDE DE BREVET EUROPEEN

(11) **EP 2 659 858 A2**
(43) Date de publication de la demande: **06.11.2013**
(21) Numéro de dépôt: 12007518.9
(22) Date de dépôt: 05.11.2012
(51) Int. Cl.: A61C 7/28, A61C 7/14, A61C 7/12

(54) **Dispositif orthodontique à attaches**

(30) Priorité: 04.11.2011 FR 1103350
(71) Demandeur: Kotliar, Jean-Claude, 93700 Drancy (FR)
(72) Inventeur: Kotliar, Jean-Claude, 93700 Drancy (FR)
(74) Mandataire: Thibon, Norbert

(57) **Abrégé**

L'invention concerne un dispositif orthodontique dans lequel un arc (20) est adapté à relier entre elles des attaches (2) rendues solidaires de dents dont on veut régler l'alignement, une attache comportant une base (10) qui est adaptée à être fixée sur une des dents et en saillie de laquelle s'étend un boîtier (12) adapté à recevoir l'arc. L'arc présente un profil initial qui est déformé par un défaut d'alignement d'une dent et que l'arc tend à recouvrer en forçant ainsi l'attache à s'aligner par rapport aux autres.

Le boîtier présente un profil ouvert à l'opposé de la base, et il est réalisé dans un matériau permettant une déformation élastique pour favoriser le passage de l'arc à travers cette ouverture.

L'arc peut être reçu dans le boîtier par l'intermédiaire d'un manchon (18) monté libre en coulissement le long de cet arc. C'est alors le manchon qui s'emboîte élastiquement dans le boîtier.

## Description

La présente invention concerne des attaches orthodontiques.

Ces attaches comportent de façon connue une base adaptée à être plaquée sur chacune des dents, un boîtier rendu solidaire de la base et dans lequel des fentes sont réalisées, et un arc adapté à être logé dans les fentes de chacun des boîtiers.

Dans ces attaches, l'arc relie l'ensemble des attaches et il se retrouve déformé si l'une des dents est décalée par rapport aux autres, faisant que l'attache correspondante est décalée par rapport au reste des attaches. L'arc est initialement conformé en un matériau tel qu'il tend à recouvrer sa forme courbe originelle. Il remet alors en position l'attache et la dent correspondante dans une position idéale par rapport aux autres.

Le traitement orthodontique est réalisé en plusieurs étapes. On colle une attache sur chacune des dents et on insère l'arc dans la totalité des attaches pour qu'il coopère avec chacune des fentes, un nouvel arc de section de plus en plus grande étant disposé à chacune des étapes du traitement jusqu'à ce que l'arc dans la dernière étape remplisse complètement chacune des fentes.

Dans des modes de réalisation particulièrement répandus de l'art antérieur, l'arc et les fentes correspondantes présentent une section rectangulaire. Il est estimé que cette coopération de formes rectangulaires est particulièrement efficace dans le traitement des décalages de dents. On dispose l'arc de section rectangulaire dans la fente de section rectangulaire et l'arc est maintenu dans la fente par un anneau de caoutchouc entouré autour de l'arc et de l'attache correspondante, ou par un dispositif de fermeture intégré sur le boîtier, dit auto-ligaturant, comme cela est divulgué par exemple dans le document W02010019768.

La présente invention propose une alternative aux dispositifs d'attaches orthodontiques tels que connus jusqu'à présent, cette alternative présentant de nombreux avantages parmi lesquels une mise en place simplifiée, un coût moindre, tout en conservant un réglage efficace de l'alignement des dents.

A cet effet, le dispositif d'attaches orthodontiques selon l'invention comporte un arc adapté à relier entre elles des attaches rendues solidaires de dents dont on veut régler l'alignement. Chaque attache comporte une base qui est adaptée à être fixée sur une dent et en saillie de laquelle s'étend un boîtier adapté à recevoir l'arc. Cet arc présente un profil initial qui est déformé par un défaut d'alignement d'une dent et de l'attache associée et que l'arc tend à retrouver en forçant l'attache à s'aligner par rapport aux autres. Selon une caractéristique de l'invention, le boîtier présente une ouverture à l'opposé de la base, et il est réalisé dans un matériau permettant une déformation élastique des parois du boîtier pour favoriser le passage de l'arc à travers cette ouverture.

Par cette conception de fixation amovible, on évite ainsi la présence d'un moyen de fermeture à rapporter pour chaque attache, et on simplifie la mise en place, qui peut facilement être faite en aveugle par exemple, pour de l'orthodontie linguale lorsque les attaches sont disposées à l'intérieur des dents. On comprend également que la facilité de la manipulation permet un retrait aisé de l'arc, ce qui est particulièrement utile dans le cas d'un traitement orthodontique où l'on va devoir réaliser successivement plusieurs échanges d'arc pour disposer au fur et à mesure du traitement des arcs de plus grand diamètre dans les attaches qui elles restent à demeure pendant tout le traitement.

Cette conception de fixation amovible peut être utilisée avec un arc emboîté directement dans le boîtier. C'est le contact de l'arc, lorsqu'on tire sur celui-ci, qui réalise directement la déformation élastique des parois du boîtier. On propose ainsi un dispositif orthodontique particulièrement simple à mettre en place, peu coûteux. La forme des parois du boîtier et celle des bords délimitant l'ouverture sont prévues pour faciliter l'insertion de l'arc dans le boîtier et nécessiter un effort plus conséquent pour le retrait de l'arc. La dimension de l'ouverture définie par l'écartement des bords en regard l'un de l'autre est inférieure au diamètre de l'arc quelle que soit la taille de l'arc. De la sorte, l'arc déforme les parois du boîtier au passage de cette ouverture et les parois du boîtier reprennent une position initiale après le passage de l'arc dans laquelle les parois bloquent l'arc à l'intérieur du boîtier.

L'arc peut également être reçu dans le boîtier par l'intermédiaire d'un manchon monté libre en coulissement le long de l'arc. C'est alors le manchon qui s'emboîte élastiquement dans le boîtier. Ainsi, la mise en place de l'arc dans les boîtiers est facilitée par la présence intermédiaire des manchons qui sont montés libre en coulissement autour de l'arc et qui peuvent être mis en regard de l'attache correspondante pour être emboîtés élastiquement. La présence des manchons permet de figer la dimension de l'ouverture du boîtier et de faire varier le diamètre de l'arc à insérer, sans se soucier du fait que la dimension de l'ouverture doive être inférieure au diamètre de l'arc. On peut ainsi choisir la forme et les dimensions du boîtier de manière à ce qu'elles soient optimales pour faciliter la déformation du boîtier sous l'effet du déplacement du manchon.

Selon une caractéristique particulièrement avantageuse, le dispositif comporte des moyens de butée pour empêcher le déplacement axial du manchon lorsque celui-ci est emboîté élastiquement dans le boîtier. Ces moyens de butée sont par exemple portés par le boîtier à ses extrémités latérales et ils s'étendent transversalement vers l'intérieur du boîtier

Ainsi, on s'assure que le manchon ne bouge pas lorsqu'il est emboîté et qu'il peut ainsi jouer son rôle de moyen de fixation de l'arc par rapport à l'attache, tout en permettant sa mobilité le long de l'arc avant qu'il soit emboîté, ce qui permet de faciliter la mise en place.

Avantageusement, le boîtier présente une section sensiblement circulaire et ouverte à l'opposé de la base, en formant ainsi une goulotte fixée sur la base, et le manchon présente une forme cylindrique de section circulaire, le diamètre extérieur du manchon étant sensiblement égal au diamètre intérieur du boîtier. Cette complémentarité des formes, et le fait que le boîtier soit réalisé dans un matériau permettant la déformation élastique des bords délimitant l'ouverture sous la pression du manchon poussé pour sa mise en pace par le praticien, permet un emboîtement élastique simple et rapide au moment de la mise en place ainsi qu'une retenue efficace du manchon à l'usage lorsque aucune force manuelle ne vient exercer une traction sur la tige pour désengager le manchon.

Selon une caractéristique de l'invention, le boîtier comporte une rainure qui est réalisée radialement dans la paroi du boîtier pour former un passage entre la base et le boîtier. On peut ainsi ajouter des moyens complémentaires d'attaches et les glisser par cette rainure pour qu'ils puissent enserrer l'arc et l'attache et améliorer la tenue de l'ensemble.

Selon des caractéristiques dans un mode de réalisation particulier de l'invention, le manchon est creux et l'arc présente une section circulaire. Dans ce cas, spécifique en ce que l'on utilise des arcs à section circulaire de la première étape à la dernière étape du traitement, les moyens de butée disposés à chaque extrémité latérale du boîtier s'étendent transversalement depuis la face intérieure du boîtier sur une distance égale à l'épaisseur du manchon. On s'assure ainsi que le manchon est bien bloqué axialement, tout en laissant le passage à l'arc quel que soit son diamètre. Dans le cas où l'arc présente un diamètre sensiblement égal au diamètre intérieur du manchon, l'arc n'est pas gêné par les moyens de butée qui ne dépassent pas à l'intérieur du manchon.

Selon des caractéristiques dans une variante de réalisation de l'invention, le manchon est plein et traversé par une fente de section rectangulaire qui s'étend sur toute la longueur du manchon, et l'arc est de section rectangulaire, adapté à être inséré dans ladite fente. On adapte ainsi l'utilisation d'un manchon, particulièrement avantageuse dans les manipulations d'installation et de retrait de l'arc par rapport aux attaches, à l'utilisation d'un arc de section rectangulaire, tel qu'ils sont couramment utilisés par les praticiens jusqu'à maintenant. Dans ce cas, on peut prévoir qu'un bossage soit formé sur le pourtour extérieur du manchon et qu'une rainure de forme et de dimension correspondante soit réalisée à l'intérieur du boîtier, de manière à ce que le manchon soit bloqué en rotation lorsqu'il est emboîté élastiquement dans le boîtier. On peut ainsi traiter un défaut d'alignement des dents supplémentaire, relatif à l'avancée d'une dent par rapport aux autres, c'est à dire une dent avec une inclinaison par rapport à la mâchoire qui est plus forte que l'inclinaison des autres dents.

Dans une autre variante de réalisation de l'invention, le boîtier et le manchon peuvent présenter une section sensiblement rectangulaire. Le boîtier est ouvert à l'opposé de la base en formant une goulotte, et le manchon est plein et traversé par une fente qui s'étend sur toute la longueur du manchon et qui est adaptée à recevoir l'arc. Le manchon présente des dimensions extérieures sensiblement égales aux dimensions intérieures du boîtier.

Selon une caractéristique avantageuse de l'invention, on prévoit d'associer des types d'attaches différentes selon les dents. Les dents antérieures, les plus accessibles, sont associées à un premier type d'attaches orthodontiques telles qu'elles viennent d'être décrites ci dessus, avec un boîtier en forme de gouttière et un manchon monté sur l'arc correspondant, tandis qu'un deuxième type d'attache est prévu pour les dents postérieures. Ce deuxième type d'attache comporte une base qui est adaptée à être plaquée sur une dent et en saillie de laquelle est disposé un fourreau, et le fourreau est percé axialement par un conduit dont le diamètre est équivalent au diamètre intérieur du manchon présent dans le premier type d'attaches.

Il convient de prévoir un arc avec un nombre de manchons montés librement coulissant autour de l'arc qui correspond au nombre d'attaches du premier type, et on s'autorise par cette association de différentes attaches à un montage encore simplifié dans lequel les dents les moins accessibles sont reliées par l'arc sans qu'il soit nécessaire au praticien d'aller glisser ses doigts au fond de la mâchoire du patient.

L'invention sera maintenant plus complètement décrite dans le cadre de caractéristiques préférées et de leurs avantages, en faisant référence aux figures 1 à 11, parmi lesquelles :
- la figure 1 est une vue de dessous d'une mâchoire supérieure et des dents adaptées à porter chacune des attaches orthodontiques reliées par un fil selon l'invention ;
- la figure 2 est une vue en perspective d'une base et d'un boîtier d'un premier type d'attache ;
- la figure 3 est une vue en perspective d'un arc et d'un manchon du premier type d'attache selon l'invention, ce manchon étant adapté à coopérer avec le boîtier illustré sur la figure 2 ;
- la figure 4 est une vue de côté de la base et du boîtier illustrés sur la figure 2 coopérant avec le manchon et l'arc illustrés sur la figure 3 ;
- la figure 5 est une vue similaire à la figure 4, avec un arc de plus grand diamètre disposé à l'intérieur du manchon ;
- la figure 6 est une vue en perspective d'une base et d'un boîtier d'un deuxième type d'attache, plus particulièrement adaptés aux dents les moins accessibles ;
- la figure 7 est une vue d'un manchon et d'un arc du premier type d'attache selon une première variante de réalisation de l'invention,
- la figure 8 est une vue de côté de la première variante de réalisation illustrée à la figure 7, avec un boîtier et une base correspondante,
- les figures 9 et 10 sont des vues semblables aux figures 2 et 3 dans le cadre d'une deuxième variante de réalisation de l'invention,
- et la figure 11 est une vue semblable à la figure 4 dans le cadre d'une troisième variante de réalisation de l'invention.

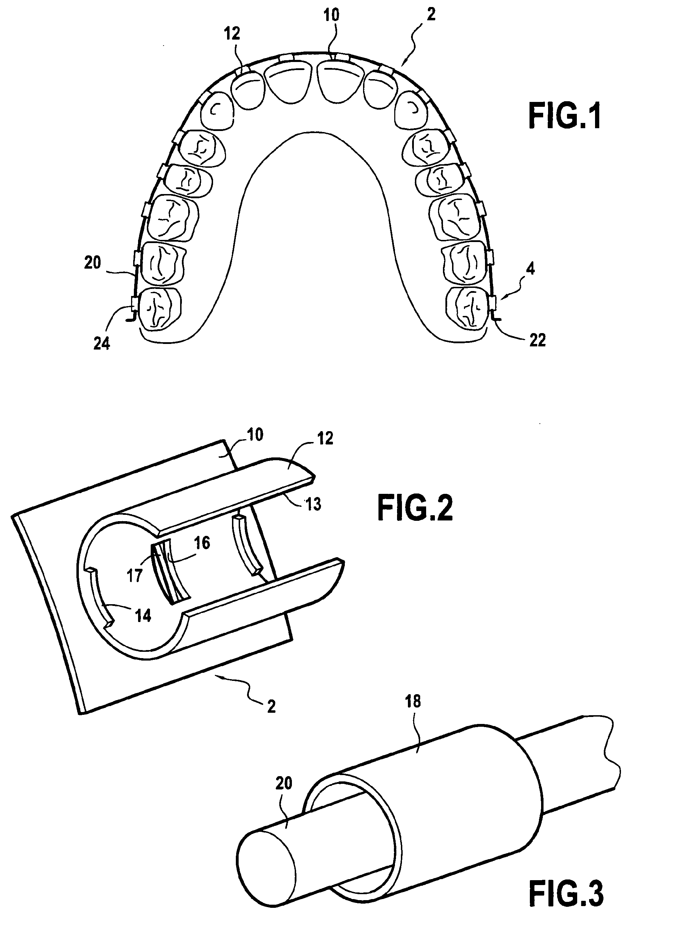

Tel que cela est schématisé sur la figure 1, un dispositif d'attaches orthodontiques comporte une multitude d'attaches disposées chacune sur une dent et un arc qui relie l'ensemble de ces attaches.

L'arc présente une longueur suffisante pour relier l'ensemble des attaches orthodontiques du dispositif.

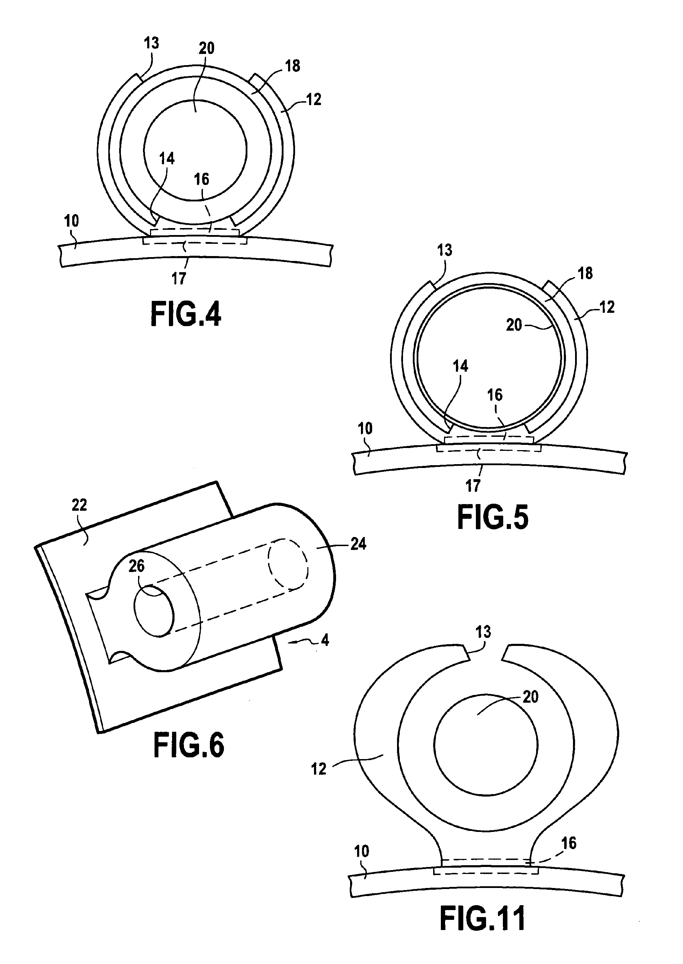

On va décrire par la suite un mode de réalisation particulièrement avantageux dans lequel les dents antérieures situées en avant de la mâchoire, c'est-à-dire les dents les plus accessibles pour le praticien, sont équipées d'un premier type d'attaches orthodontiques 2 tandis que les dents les moins accessibles pour le praticien, c'est-à-dire les dents postérieures situées à l'arrière de la mâchoire, sont équipées d'un deuxième type d'attaches orthodontiques 4, illustré notamment sur la figure 6.

Le premier type d'attaches orthodontiques 2 est notamment visible sur les figures 2 à 5, et 7 à 11. Une première variante de réalisation va être décrite en s'appuyant sur les figures 2 à 5. Chacune de ces attaches comporte une base 10 en saillie de laquelle s'étend un boîtier 12. La base est ici représentée avec un profil légèrement courbe, mais il sera compris qu'elle peut prendre une forme adaptée à reposer sur des dents au profil spécifique. Tel que cela sera décrit ci-après, la base se plaque par collage sur la dent et elle peut être équipée de moyens d'accroche complémentaires disposés du côté de la base opposé au boîtier, pour une meilleure tenue sur les dents. Les moyens d'accroches complémentaires pourront prendre la forme d'éléments en saillie de la base, répartis sur toute l'étendue de la base, et aptes à être noyés dans la colle entre la dent et la base. A titre d'exemples non représentés, ils pourront prendre la forme d'un treillis métallique ou de portions cylindriques.

Le boîtier 12 présente une section sensiblement circulaire et ouverte à l'opposé de la base 10, de telle sorte qu'il présente la forme d'une goulotte fixée sur la base avec une ouverture délimitée par des bords 13 des parois du boîtier. A ses extrémités latérales, le boîtier comporte des bords tombés 14, qui s'étendent transversalement vers l'intérieur du boîtier.

Sensiblement au centre du boîtier, un passage vertical est réalisé pour permettre de glisser une tige d'accessoire entre la base et le boîtier de manière à ce que cet accessoire (non représenté sur les figures) puisse venir entourer le boîtier. Le passage vertical comporte une première rainure 16 réalisée radialement dans le boîtier et une deuxième rainure 17 réalisée en regard dans la base.

Le boîtier est réalisé dans un matériau permettant une déformation élastique des parois dont les bords délimitent l'ouverture à l'opposé de la base, de telle sorte qu'un manchon 18 tel qu'illustré sur la figure 3, de section circulaire et dont le diamètre extérieur est sensiblement égal au diamètre intérieur du boîtier, peut être inséré à force dans le boîtier en déformant au passage les bords 13 qui reprennent leur position initiale lorsque le manchon est en place dans le boîtier. La longueur de ce manchon est sensiblement égale à la distance entre les bords tombés 14 disposés à chacune des extrémités latérales du boîtier, de telle sorte que lorsque le manchon est inséré à force dans le boîtier, il est bloqué longitudinalement par les bords tombés formant butées latérales. Tel qu'illustré sur les figures, et tel que cela est particulièrement visible sur la figure 4, le bord tombé 14 à chaque extrémité latérale du boîtier s'étend transversalement depuis la face intérieure du boîtier sur une distance égale à l'épaisseur du manchon. De la sorte, le manchon est bien bloqué longitudinalement dans le boîtier par la présence des bords tombés, mais ceux-ci ne s'étendent pas au-delà de la paroi circulaire du manchon vers l'intérieur de celui-ci, de sorte que la totalité du volume intérieur du manchon est dégagée.

Le manchon est adapté à recevoir un arc 20 le traversant de part en part, comme cela est illustré sur la figure 3. Lorsque le manchon est inséré à force dans le boîtier, il convient que l'arc ne soit pas contraint par les bords tombés, que l'arc présente un petit diamètre en début de traitement (figure 4) ou un diamètre sensiblement égal au diamètre intérieur du manchon en fin de traitement (figure 5).

Afin de faciliter la pose de l'appareil pour les praticiens, il peut être prévu comme décrit précédemment de combiner différents modes de réalisations d'attaches orthodontiques pour un même patient. Le deuxième type d'attaches 4, notamment visible sur la figure 6, est utilisé pour les dents les moins accessibles. Chacune de ces attaches comporte une base 22 adaptée à être plaquée sur une dent et sensiblement similaire celle utilisée dans le premier type d'attache. En saillie de cette base on a disposé un fourreau 24 qui est percé axialement par un conduit 26 d'un diamètre équivalent au diamètre intérieur du manchon présent dans les attaches de premier type 2. L'extrémité mésiale du conduit, c'est à dire celle qui est tournée vers le centre de la bouche, est évasée pour faciliter par la suite l'introduction de l'arc dans le fourreau.

A titre d'exemple représenté sur la figure 1, l'arc sera muni de six manchons adaptés à coopérer avec les six attaches orthodontiques disposées sur les six dents de devant. On comprendra que dans une disposition particulière du dispositif d'attaches orthodontiques, les seize dents peuvent être équipées d'un boîtier selon le premier mode de réalisation et que l'arc comprendra alors seize manchons montés libres autour de l'arc et qu'il s'agira de disposer un par un par emboîtement élastique dans chacun des boîtiers. Dans chacun des agencements possibles selon l'invention, l'arc est muni de manchons adaptés à se déplacer librement le long de l'arc lorsque celui-ci n'est pas en prise dans les boîtiers, et le nombre de ces manchons est égal au nombre de boîtiers du premier type d'attaches disposés sur les dents.

Il peut être nécessaire lors du traitement du patient d'associer à une ou plusieurs des attaches orthodontiques des accessoires complémentaires. A cet effet, le passage vertical, réalisé au moins en partie dans l'épaisseur de la base et dans l'épaisseur du boîtier, permet de glisser la tige de ces accessoires entre la base 10 et le boîtier en forme de gouttière 12 pour par exemple venir faire le tour du boîtier et le baguer. On comprendra qu'il importe que la tige d'accessoire puisse être logée dans le passage vertical sans dépasser à l'intérieur du boîtier, pour que la présence du manchon dans le boîtier n'interfère pas avec le passage de la tige d'accessoire. De la sorte, la deuxième rainure 17 réalisée dans l'épaisseur de la base doit être suffisamment profonde. On pourrait également envisager que le passage vertical ne soit formé que de la deuxième nervure réalisée dans l'épaisseur de la base.

On va maintenant décrire la mise en place d'un arc dans les attaches une fois que ces attaches ont été collées sur les dents du patient.

Dans un premier temps, on insère l'arc successivement dans chacun des fourreaux du deuxième type d'attaches, en commençant par les fourreaux les plus accessibles puis en allant vers les fourreaux les plus en arrière. Si l'arc est trop long, de telle sorte qu'il dépasse en arrière de ces fourreaux les moins accessibles, on prévoit de couper au moins une extrémité de l'arc. Afin d'éviter que l'arc, du fait de l'absence de friction entre l'arc et les attaches, ne glisse et ne s'échappe des fourreaux correspondants à ses extrémités, on prévoit de déformer l'arc entre deux dents consécutives pour que cette déformation forme butée entre les attaches correspondant à ces dents.

On relie ensuite le reste des attaches par l'arc en emboîtant élastiquement chacun des manchons libres en coulissement autour de l'axe dans les boîtiers du premier type d'attaches.

Lorsque le praticien a procédé à toutes ces opérations de mise en place, on constate que, tel que cela est visible sur les figures 4 et 5, le manchon est immobilisé par rapport au boîtier, aussi bien axialement par les bords tombés 14 qui forment butées latérales que radialement par la semi-rigidité du boîtier, dont les bords ne se déforment élastiquement que sous une contrainte déterminée.

Dans le cas où les attaches comportent des crochets (non représentés et qui s'étendent en saillie vers l'extérieur du boîtier, et classiquement en direction de la gencive), on peut assurer la tenue de l'ensemble du dispositif par la pose d'élastiques tenus par ces crochets, avantageusement disponibles sur les attaches associées aux molaires et aux canines.

On va maintenant décrire le déroulement du traitement et le rôle du dispositif d'attaches selon l'invention pour régler l'inclinaison et la hauteur des dents. Le praticien, une fois que les attaches sont collées sur les dents, dispose un arc dans les attaches. L'arc présente à l'origine une forme courbe régulière et il est réalisé dans un matériau à mémoire de forme, par exemple dans un alliage Nickel-Titane. L'arc est amené à être déformé pour pouvoir être inséré dans chacune des attaches. Si une dent a un défaut d'alignement dit de hauteur, c'est à dire qu'elle se retrouve plus ou moins sortie de la gencive par rapport aux dents voisines, l'arc est déformé dans un plan vertical. Si une dent a un défaut d'alignement dit d'inclinaison, c'est à dire qu'elle penche vers l'une de ses dents voisines, l'arc se trouve également déformé dans un plan vertical. Une fois installée, dans la bouche du patient, l'arc tend à reprendre sa forme originelle et il entraîne la dent présentant le défaut d'alignement.

Dans un premier temps, le praticien dispose un arc de petit diamètre dans les attaches. On comprendra que le diamètre est déterminé par le praticien en fonction du défaut d'alignement initial constaté chez le patient. Dans tous les cas, il est intéressant d'avoir dans un premier temps un arc dont le diamètre est inférieur au diamètre intérieur du manchon. De la sorte, l'arc peut débattre dans le manchon et il est ainsi susceptible de se déformer plus fortement avec des contraintes mécaniques moindres. C'est en début de traitement que les dents présentent leur défaut d'alignement maximal et le fait d'utiliser un arc de moindre diamètre qui peut débattre à l'intérieur du manchon permet que les dents ne soient pas trop fortement sollicitées. Périodiquement, le praticien décide s'il faut ou non passer à une étape suivante du traitement qui consiste à retirer l'arc utilisé précédemment et à le remplacer par un arc de plus grand diamètre. On autorise ainsi moins de jeu de débattement de l'arc dans les manchons et les fourreaux et on sollicite d'avantage les dents qu'elles ne l'étaient en fin de l'étape précédente. Ces étapes de remplacement de l'arc utilisé par un nouvel arc de plus grand diamètre se poursuit jusqu'à ce que l'arc présente un diamètre sensiblement égal au diamètre intérieur des manchons et des fourreaux. Dans cet agencement, les attaches suivent instantanément l'arc lorsqu'il est forcé à reprendre sa forme courbe originelle. En fin de traitement, les défaut d'alignement à corriger sont minimes et les contraintes sur les dents ne sont pas trop fortes.

A chaque nouvelle étape du traitement, lorsque le praticien a décidé de faire évoluer le diamètre de l'arc, il retire l'arc précédemment utilisé en tirant dessus au niveau des dents antérieures, c'est à dire les dents les plus faciles d'accès. L'effort de traction généré par le praticien force les manchons à sortir des boîtiers grâce à la déformation élastique des bords délimitant l'ouverture des boîtiers dans les attaches de premier type. Lorsque tous les manchons sont sortis de leur boîtier correspondant, le praticien continue de tirer sur l'arc pour le faire sortir successivement de chacun des fourreaux associés aux dents postérieures.

Il s'agit alors de choisir un arc de la dimension appropriée et de le mettre en place conformément à ce qui a été décrit précédemment. On observe que, quel que soit le diamètre de l'arc qui est utilisée par le praticien, les manchons associés sont d'un diamètre fixe pour qu'ils correspondent exactement aux dimensions du boîtier et qu'ils soient bloqués en position à l'intérieur de ce boîtier. On peut ainsi facilement faire évoluer le diamètre de l'arc au fur et à mesure du traitement du patient, en simplifiant tel que cela sera démontré ci-après les opérations de montage et de démontage de cet arc par rapport au boîtier.

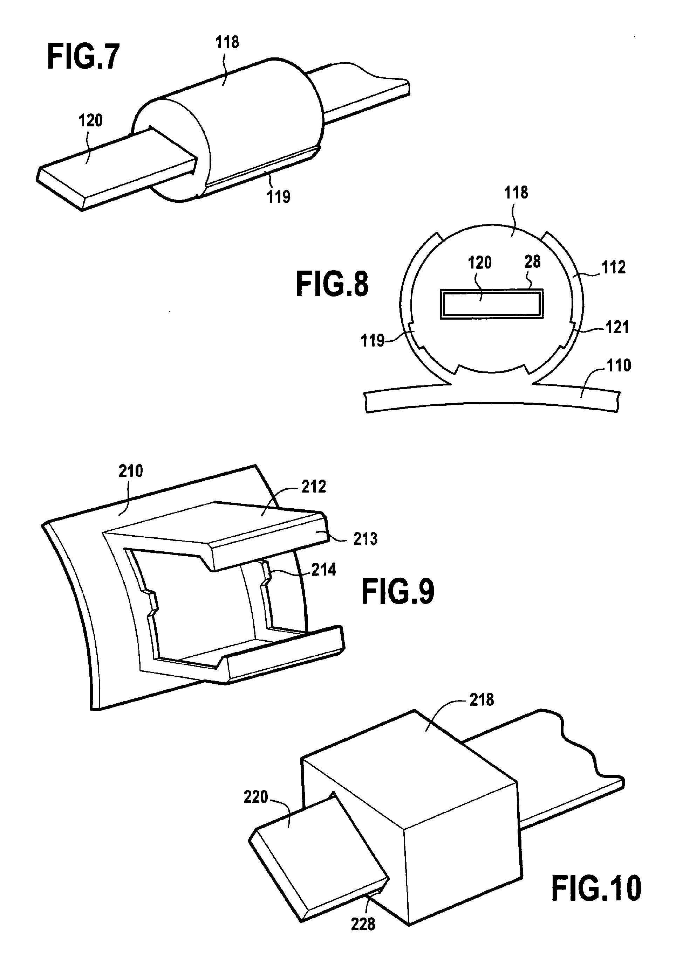

On va maintenant décrire une première variante de réalisation illustrée sur les figures 7 et 8.

Conformément à la réalisation précédemment décrite, des manchons 118 sont montés librement sur un arc 120, les manchons étant adaptés à être emboîtés élastiquement dans des boîtiers 112 formant gouttière et rapportés sur une base 110 adaptée à être plaquée sur les dents. Cette variante de réalisation diffère de la réalisation précédemment décrite en ce que le manchon 118, de section cylindrique, n'est pas creux mais plein et en ce qu'il est traversé par une fente 28 de section rectangulaire qui s'étend longitudinalement d'une extrémité latérale à l'autre du manchon.

On a représenté aux figures 9 et 10 une deuxième variante de réalisation dans laquelle, conformément à ce qui a été décrit ci-dessus, des manchons 218 sont montés libre en coulissement sur un arc 220, les manchons étant adaptés à être emboîtés élastiquement dans des boîtiers 212 rapportés sur une base 210 adaptée à être plaquée sur les dents. Cette deuxième variante de réalisation diffère en ce que le boîtier 212 et le manchon 218 ne présentent pas de section circulaire mais rectangulaire. Le manchon n'est pas creux mais plein et il est traversé par une fente 228 de section rectangulaire qui s'étend longitudinalement d'une extrémité latérale à l'autre du manchon. On fait ainsi coopérer les manchons avec un arc de section rectangulaire telle qu'il est classiquement utilisé par les praticiens.

Dans ces deux variantes de réalisation, comme dans la réalisation initialement décrite, on fait coopérer les manchons avec un arc de section rectangulaire telle qu'il est classiquement utilisé par les praticiens. Ainsi, outre le fait de pouvoir régler l'alignement des dents en hauteur et en inclinaison comme c'est le cas dans le mode de réalisation initialement décrit, le dispositif permet dans ces cas de régler également l'avancée des dents ou le recul des dents par rapport à un plan perpendiculaire à la mâchoire, par la coopération des formes rectangulaires de la fente et de l'arc et par l'inclinaison donnée de la fente par rapport à un plan de référence choisi, par exemple le plan horizontal. Il convient pour cela, dans la première variante, de s'assurer que le manchon ne tourne pas à l'intérieur du boîtier afin que la fente garde la bonne inclinaison. A cet effet, le manchon présente sur sa paroi extérieure au moins un bossage 119 qui s'étend longitudinalement sur toute la longueur du manchon et qui est adapté à coopérer avec une rainure 121 disposée sur la paroi intérieure du boîtier. Tel qu'illustré sur la figure 8, le manchon peut comporter deux bossages de ce type qui coopèrent respectivement avec deux rainures réalisées à l'intérieur du boîtier.

Dans ces deux variantes, là aussi, le montage du dispositif orthodontique dans la bouche du patient est facilité par la présence d'un manchon qui peut être emboîté élastiquement dans le boîtier déformable élastiquement, formant ainsi un montage amovible. Il convient de noter que l'on peut dès lors avantageusement proposer des valeurs différentes d'inclinaison de l'arc par rapport aux attaches, en fournissant différents manchons. Ainsi, sans avoir besoin de changer l'ensemble de l'attache, on peut facilement ajuster le réglage lors de la pose par le praticien.

Dans une troisième variante de l'invention, illustrée sur la figure 11, l'arc est inséré directement dans le boîtier, sans l'intermédiaire d'un manchon. Dans cette variante, on dimensionne l'ouverture, définie par l'écartement des bords en regard l'un de l'autre, pour que quel que soit le diamètre de l'arc, ce dernier soit maintenu en position à l'intérieur du boîtier lorsque les parois et leurs bords ont repris leur position initiale. L'ouverture doit ainsi présenter une dimension inférieure au diamètre du plus petit des arcs susceptibles d'être inséré directement dans le boîtier. Par ailleurs, on prévoit une forme des parois et une inclinaison des bords délimitant l'ouverture telles que les parois puissent s'écarter suffisamment, malgré la plus faible dimension de l'ouverture dans leur position initiale, pour laisser passage à l'arc quelle que soit sa taille.

La description qui précède explique clairement comment l'invention permet d'atteindre les objectifs qu'elle s'est fixés et notamment d'assurer un alignement efficace des dents, au moins en hauteur et en inclinaison, ce grâce à un système facile à mettre en oeuvre et peu coûteux.

Le dispositif selon l'invention permet un maintien en position de l'arc dans des attaches qui ne génère pas de friction sur l'arc, contrairement aux caoutchoucs rapportés sur les boîtiers qui peuvent être utilisés dans l'art antérieur. Et ce maintien sans friction est obtenu sans la mise en place d'un dispositif auto-ligaturant, dans lequel un moyen de fermeture est intégré sur le boîtier. La réalisation du dispositif en est simplifiée. De la sorte, le fabricant peut réaliser plus facilement ces éléments en céramique, pour soigner l'esthétique du dispositif, ce qui est de plus en plus souvent demandé par les patients. Et le fait de ne pas avoir à rapporter sur le boîtier de moyens de fermeture intégrés permet une disposition verticale du passage pour loger entre la base et le boîtier les tiges d'accessoire dans une position optimisée.

Ce dispositif présente en outre l'avantage, par sa simplicité de mise en place, de pouvoir être facilement utilisé en orthodontie linguale, c'est-à-dire avec des attaches disposées à l'intérieur des dents, et donc orientées vers l'intérieur de la bouche et la langue. L'emboîtement élastique de l'arc dans les gouttières peut se faire facilement pour le praticien alors que ce montage se fait en aveugle ce qui rend compliqué le montage des dispositifs tels que connus dans l'état de la technique.

Le dispositif selon l'invention permet avantageusement au praticien, lorsqu'il utilise des manchons intermédiaires, de choisir s'il souhaite travailler avec un arc à section circulaire ou un arc à section rectangulaire. On observe que le mode de réalisation avec un arc à section circulaire permet de ne pas tenir compte des tolérances de fabrication de la fente et de l'arc à section rectangulaire telles qu'elles doivent être prises en compte dans les dispositifs de l'état de la technique.

## Revendications

1. Dispositif orthodontique comportant un arc (20; 120) et des attaches (2), l'arc étant adapté à relier entre elles les attaches prévues pour être rendues solidaires de dents dont on veut régler l'alignement, une attache comportant une base (10; 110) qui est adaptée à être fixée sur une des dents et en saillie de laquelle s'étend un boîtier (12; 112) adapté à recevoir ledit arc, et dans lequel ledit arc présente un profil initial qui est déformé par un défaut d'alignement d'une dent et que l'arc tend à recouvrer en forçant ainsi l'attache à s'aligner par rapport aux autres, **caractérisé en ce que** le boîtier présente une ouverture à l'opposé de la base, et **en ce qu'**il est réalisé dans un matériau permettant une déformation élastique des parois du boîtier pour favoriser le passage de l'arc à travers cette ouverture.

2. Dispositif orthodontique selon la revendication 1, **caractérisé en ce que** le boîtier (12; 112) comporte un passage vertical entre la base (10; 110) et le boîtier, ledit passage comportant au moins une rainure (17) qui est réalisée dans l'épaisseur de la base.

3. Dispositif orthodontique selon la revendication 1 ou 2, **caractérisé en ce que** l'arc (20) est reçu directement dans le boîtier (12), dont les parois sont agencées pour former ladite ouverture de passage de l'arc qui présente, dans la position initiale des parois dont les bords délimitent l'ouverture, une dimension inférieure au diamètre de l'arc, de manière à retenir en position l'arc à l'intérieur du boîtier.

4. Dispositif orthodontique selon la revendication 1 ou 2, **caractérisé en ce que** l'arc est reçu dans le boîtier par l'intermédiaire d'un manchon (18; 118) s'emboîtant élastiquement dans ledit boîtier, ledit manchon étant monté libre en coulissement le long dudit arc.

5. Dispositif orthodontique selon la revendication 4, **caractérisé en ce qu'il** comporte des moyens de butée (14) adaptés à empêcher le déplacement axial du manchon relativement au boîtier (18; 118) lorsque ledit manchon est emboîté élastiquement dans ledit boîtier.

6. Dispositif orthodontique selon la revendication 5, **caractérisé en ce que** le boîtier (12; 112) comporte à ses extrémités latérales lesdits moyens de butée (14) qui s'étendent transversalement vers l'intérieur du boîtier.

7. Dispositif orthodontique selon l'une des revendications 3 à 6, **caractérisé en ce que** le boîtier (12; 112) présente une section sensiblement circulaire et ouverte à l'opposé de la base (10; 110), en formant ainsi une goulotte fixée sur la base, et **en ce que** le manchon (18; 118) présente une forme cylindrique de section circulaire, le diamètre extérieur du manchon étant sensiblement égal au diamètre intérieur du boîtier.

8. Dispositif orthodontique selon la revendication 7, **caractérisé en ce que** le manchon (18) est creux et **en ce que** l'arc (20) présente une section circulaire.

9. Dispositif orthodontique selon la revendication 7, **caractérisé en ce que** le manchon (118) est plein et traversé par une fente (28) de section rectangulaire qui s'étend sur toute la longueur du manchon, et **en ce que** l'arc (120) est de section rectangulaire, ledit arc étant adapté à être inséré dans ladite fente.

10. Dispositif orthodontique selon la revendication 9, **caractérisé en ce qu'**un bossage (119) est formé sur le pourtour extérieur du manchon (118) et **en ce qu'**une rainure (121) de forme et de dimension correspondante est réalisée à l'intérieur du boîtier (112), de manière à ce que le manchon soit bloqué en rotation lorsqu'il est emboîté élastiquement dans le boîtier.

11. Dispositif orthodontique selon l'une des revendications 3 à 6, **caractérisé en ce que** le boîtier (212) présente une section sensiblement rectangulaire et ouverte à l'opposé de la base (210), en formant ainsi une goulotte fixée sur la base, et **en ce que** le manchon (218) présente une section sensiblement rectangulaire, de dimensions extérieures sensiblement égales aux dimensions intérieures du boîtier, ledit manchon étant plein et traversé par une fente (228) qui s'étend sur toute la longueur du manchon et qui est adaptée à recevoir l'arc.

12. Dispositif orthodontique caractérisé en que des attaches orthodontiques (2) d'un premier type selon l'une des revendications précédentes sont prévues pour être associées aux dents antérieures, et en ce que des attaches d'un deuxième type (4) sont prévues pour les dents postérieures, ledit deuxième type d'attache comportant une base (22) qui est adaptée à être plaquée sur une dent et en saillie de laquelle est disposé un fourreau (24), ledit fourreau étant percé axialement par un conduit (26) de réception de l'arc (20).
